# EUROPEAN PATENT APPLICATION

(11) **EP 4 418 349 A1**
(43) Date of publication of application: **21.08.2024**
(21) Application number: 22881084.2
(22) Date of filing: 13.10.2022
(51) Int. Cl.: H01M 4/139, H01M 4/62

(54) **APPARATUS FOR MANUFACTURING MEDICAL MIXTURE SHEET FOR ELECTROCHEMICAL DEVICE, AND METHOD FOR MANUFACTURING MEDICAL MIXTURE SHEET**

(30) Priority: 14.10.2021 JP 2021168910
(71) Applicant: Daikin Industries, Ltd., Osaka-shi, Osaka 530-0001 (JP)
(72) Inventor: YAMADA, Takaya, Osaka-shi, Osaka 530-0001 (JP); YAMADA, Masahiko, Osaka-shi, Osaka 530-0001 (JP); HIRAGA, Kentarou, Osaka-shi, Osaka 530-0001 (JP); SUI, Xianwei, Osaka-shi, Osaka 530-0001 (JP); TERADA, Junpei, Osaka-shi, Osaka 530-0001 (JP)
(74) Representative: Hoffmann Eitle
(86) International application number: PCT/JP2022/038214
(87) International publication number: WO 2023/063389

(57) **Abstract**

Provided are a production apparatus and a production method capable of producing an electrode industrially by an efficient method. A mixture sheet production apparatus for an electrochemical device includes a stacking mechanism that stacks two or more mixture sheets containing a binder resin and a press-fusing mechanism that is provided downstream of the stacking mechanism and that integrates the stacked mixture sheets by applying pressure.

## Description

### Technical Field

The present disclosure relates to a mixture sheet production apparatus for an electrochemical device and a mixture sheet production method.

### Background Art

Investigation has been conducted on forming fibrils in a polytetrafluoroethylene resin for use as a binder resin (Patent Literature 1 to Patent Literature 3). Further, the use of a polytetrafluoroethylene resin as a binder resin in the production of an electrode has also been disclosed.

### Citation List

### Patent Literature

Patent Literature 1: Japanese Translation of PCT International Application Publication No. 2017-517862
Patent Literature 2: Japanese Unexamined Patent Publication No. 2007-26984
Patent Literature 3: Japanese Translation of PCT International Application Publication No. 2020-522090

### Summary of Invention

### Technical Problem

An object of the present disclosure is to provide a production apparatus and a production method capable of producing an electrode industrially by an efficient method.

### Solution to Problem

The present disclosure relates to a mixture sheet production apparatus for an electrochemical device, including a stacking mechanism that stacks two or more mixture sheets containing a binder resin and a press-fusing mechanism that is provided downstream of the stacking mechanism and that integrates the stacked mixture sheets by applying pressure.

It is preferred that the press-fusing mechanism has parallel rolls that face each other.

It is preferred that the mixture sheet production apparatus further include an adhesion mechanism that adheres the press-fused mixture sheets that have passed through the press-fusing mechanism to a current collector.

It is preferred that the mixture sheet production apparatus further include a sheet forming mechanism that produces the mixture sheets using a forming roll.

It is preferred that the binder resin contains a polytetrafluoroethylene resin.

It is preferred that the electrochemical device is a lithium ion secondary battery.

The present disclosure also relates to a method for producing a mixture sheet for an electrochemical device, the method including a step (1) of stacking two or more mixture sheets containing a binder resin and a step (2) of integrating the mixture sheets obtained in step (1) by applying pressure.

It is preferred that the pressure is applied at a temperature of 25°C or higher.

It is preferred that the method for producing a mixture sheet of the present disclosure further includes a step (3) of adhering the integrated mixture sheets obtained in step (2) to a current collector.

It is preferred that the mixture sheets used in step (1) are obtained in a step (0) of forming a mixture into a sheet shape using a forming roll.

It is preferred that the binder resin contains a polytetrafluoroethylene resin.

It is preferred that the integrated mixture sheets obtained in step (2) have, in a cross-sectional observation with an electron microscope, a monolayer structure in which a stacked structure derived from the stacking of the plurality of sheets has disappeared.

It is preferred that the electrochemical device is a lithium ion secondary battery.

### Advantageous Effects of Invention

According to the production apparatus of the present disclosure, an electrode and an electrolyte layer can be produced using a resin that forms fibrils as a binder resin.

### Brief Description of Drawings

FIG. 1 is a schematic diagram showing an example of a stacking mechanism used in the present disclosure.
FIG. 2 is a schematic diagram showing an example of a stacking mechanism used in the present disclosure.
FIG. 3 is a schematic diagram showing an example of a stacking mechanism used in the present disclosure.
FIG. 4 is a schematic diagram showing an example of a stacking mechanism used in the present disclosure.
FIG. 5 is a schematic diagram showing an example of a press-fusing mechanism used in the present disclosure.
FIG. 6 is a schematic diagram showing an example of a press-fusing mechanism used in the present disclosure.
FIG. 7 is a schematic diagram showing an example of a press-fusing mechanism used in the present disclosure.
FIG. 8 is a schematic diagram showing an example of a mixture sheet production apparatus of the present disclosure.
FIG. 9 is a diagram showing an electron micrograph of a cross section of a mixture sheet obtained by the mixture sheet production method of the present disclosure.

### Description of Embodiments

The present disclosure will now be described in detail.

When a resin that forms fibrils is used as a binder resin to produce a mixture sheet for an electrode, an electrolyte layer, or the like in a battery, a step of forming the resin fibrils by application of a shear force is required. Sufficient investigation has not been conducted regarding a production apparatus for a mixture sheet that can efficiently carry out such treatment industrially and exhibit good properties as a binder resin.

The mixture sheet is required to be capable of achieving uniformity of the entire sheet and stably maintaining performances such as conductivity and strength.

Further, a mixture sheet in which a resin that forms fibrils is used as a binder resin is not melt-formed by heating, but is formed into a sheet shape while being pressed by roll forming. However, forming a sheet using a roll causes defects such as holes in the process of thinning the sheet, making it difficult to obtain a suitable sheet.

To solve these issues and obtain a mixture sheet having a good performance, it is preferred to cause the binder resin to sufficiently form fibrils so that the fibers are sufficiently entangled. In addition, to enable mass production using an industrial method, consideration needs to be given to how to apply a shear force in the most efficient manner and to reduce the occurrence of defective products.

In the present disclosure, there is provided a mixture sheet production apparatus for an electrochemical device, including: a stacking mechanism that stacks mixture sheets; and a press-fusing mechanism that is provided downstream of the stacking mechanism and that integrates the stacked mixture sheets by applying pressure. The mixture sheet produced by such a mixture sheet production apparatus is excellent in each of the above-described effects desired as a mixture sheet, and at the same time is suited to continuous production, and thus is an excellent industrial mixture sheet production apparatus.

From the above viewpoint, the present disclosure includes a stacking mechanism and a press-fusing mechanism that integrates stacked mixture sheets by applying pressure. That is, by performing processing using such a stacking mechanism and press-fusing mechanism, sheet defects that exist in a single layer state can be reduced. In addition, the binder resin forms further fibrils through press-fusing after stacking. This further enhances its function as a binder resin through entangling of the fibrous resin, and also eliminates the interface between each layer at the time of stacking, so that a mixture sheet having excellent performance is industrially produced.

The stacking mechanism is a mechanism for superimposing a plurality of sheet-like mixtures. Such a stacking mechanism is not limited, and may be a mechanism that superimposes a plurality of sheets or a mechanism that folds one or more sheets.

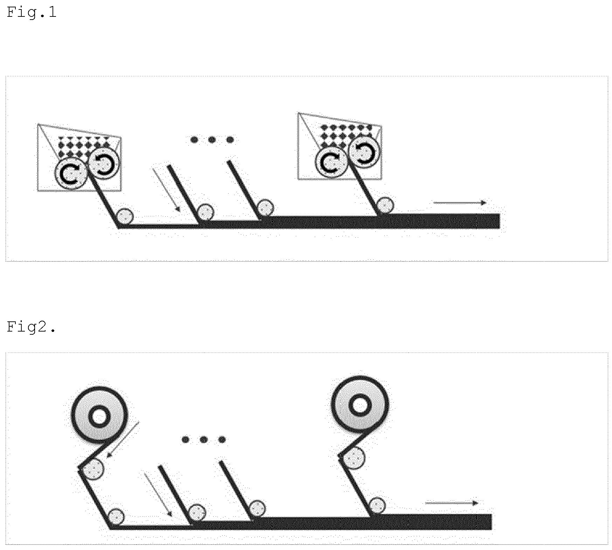

FIG. 1 to FIG. 4 are schematic diagrams of specific examples of the stacking mechanism. It is noted that the stacking mechanism of the present disclosure is not limited to these.

The mechanism shown in FIG. 1 is a mechanism in which the mixture sheet production apparatus has a plurality of sheet forming mechanisms, in which sheets fed out from the plurality of sheet forming mechanisms are stacked as they are.

The mechanism shown in FIG. 2 is a mechanism that simultaneously unwinds rolled sheets and stacks the sheets as they are. That is, a sheet-like mixture is first produced by a separately provided sheet-forming mechanism, and then wound onto a roll. Stacking is then performed by simultaneously feeding the wound rolls to the stacking mechanism using a plurality of feeding mechanisms.

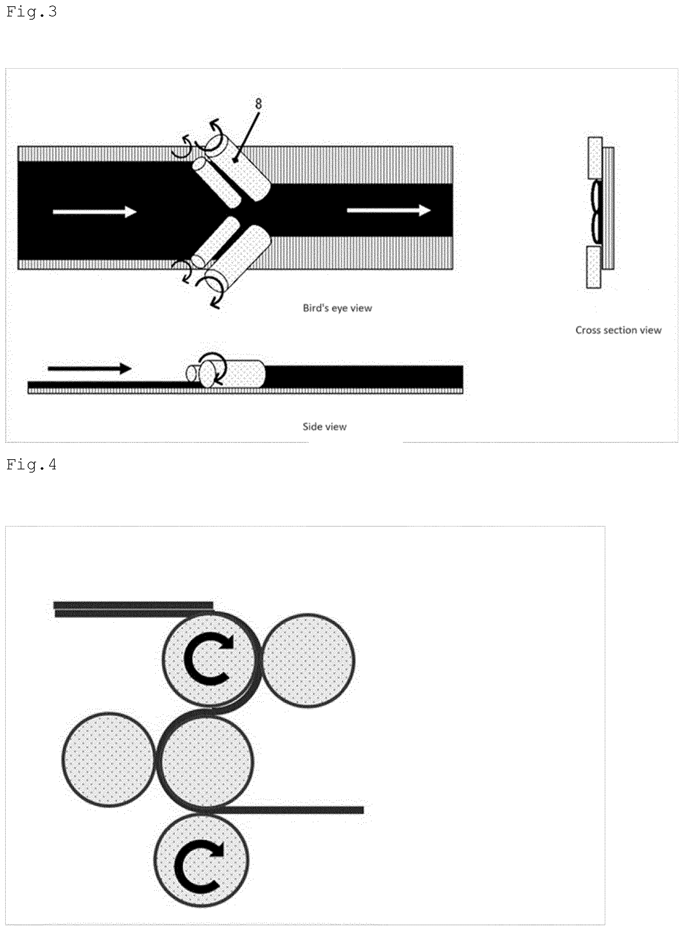

The mechanism shown in FIG. 3 is a mechanism that performs stacking by folding sheets using folding rolls.

The mechanism shown in FIG. 4 is a mechanism that performs stacking by folding sheets using a guide plate. These mechanisms can be known devices. Further, a combination of these plurality of mechanisms may be used.

The stacking mechanism may be any mechanism that stacks two or more sheets, and the number of stacked sheets is not limited. Specifically, it is preferred to stack 2 to 5 sheets. Further, it is preferred that the thickness of the sheets before stacking is 50 to 500 µm. By being within this range, the steps of stacking and press-fusing can be performed suitably.

The press-fusing mechanism is provided downstream of the stacking mechanism, and integrates the stacked mixture sheets by applying pressure. That is, this is a step in which a shear force is applied to the stacked sheets by applying pressure, thereby promoting the formation of fibrils in the mixture sheets, causing the sheets to become integrated. It is noted that a state in which the "sheets are integrated" means that when a cross-section of the sheets after press-fusing is observed with an electron microscope, no clear interface is observed when the sheets are stacked.

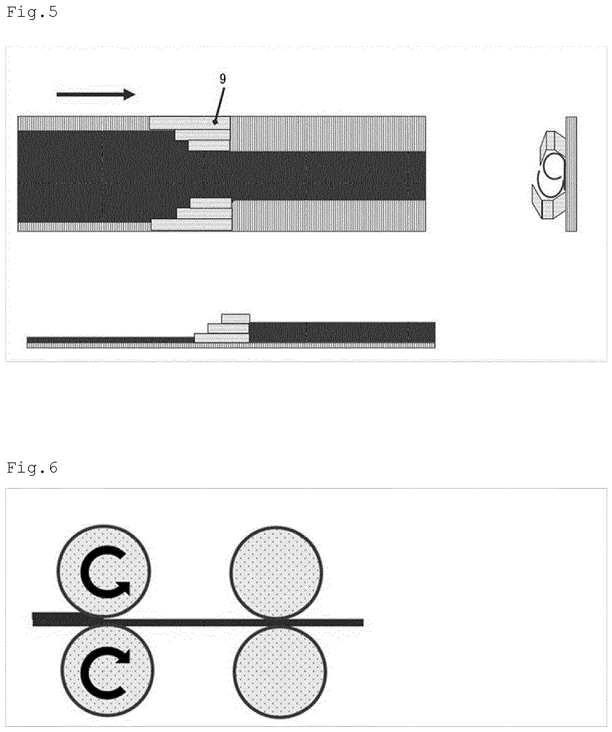

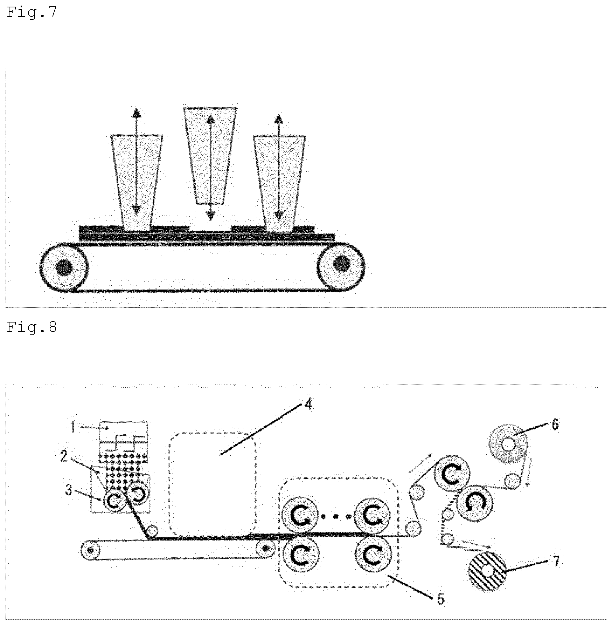

The press-fusing mechanism is not limited as long as it can achieve the above-described purpose. However, specific examples include a mechanism that can apply pressure using a pressure roll (for example, FIGS. 5 and 6), and a mechanism that can apply pressure by moving a piston-like load mechanism, which can move up and down, up and down so that the sheet passes under the piston-like load mechanism (for example, FIG. 7), and the like. Among these, applying pressure using a pressure roll is particularly preferable because continuous processing is easy.

The pressure roll directly contacts the mixture sheet passing through the press-fusing mechanism and further applies pressure. As a result, the fibrils are formed in the binder resin by a shear force, and a function as a binder is exhibited. Further, since the sheet itself becomes thinner, the thickness can be adjusted to a desired thickness. In addition, by applying pressure, the density of the mixture sheet can be increased.

The pressure roll is preferably a rubber roll, a resin roll, or a metal roll. In particular, by using a metal roll, an appropriate pressure can be applied. The material of the metal roll is not limited, and examples include iron, stainless steel (SUS304, SUS430, SUS410, SUS403, etc.), copper, and the like. Further, the roll surface may be subjected to various surface treatments in order to improve durability and processability. The surface treatments are not limited, and examples include a plating treatment such as chrome plating, copper plating, nickel plating, or composite plating of these, a mechanical treatment such as embossing or grooving, and a treatment that improves the separability of a fluorine coating, a silicon coating, and the like.

The pressure applied by the press-fusing mechanism is preferably 1 to 200 MPa, more preferably 5 to 100 MPa, and further preferably 10 to 80 MPa. Within this range, the stacked sheets are integrated and it is possible to suitably produce an electrode in which an increase in electrode resistance is suppressed.

The application of pressure using a pressure roll is preferably performed by heating the mixture sheets in an electric furnace or by heating the pressure roll itself. The temperature range of the mixture sheets is preferably in the range of 25 to 250°C, more preferably in the range of 30 to 230°C, and further preferably in the range of 40 to 200°C. By using such pressure application conditions, the sheets can be more easily integrated, and the object of the present disclosure can be suitably achieved. The pressure rolls facing each other may have different diameters and may have different rotational speeds. With such a design, the shear force applied to the sheet can be changed.

Known means can be employed as the press-fusing means using a pressure roll. More specifically, examples include using a two-high rolling mill as described in JP 5087646 B, using a cluster mill as described in WO 2020/204070, and using a planetary rolling mill as described in JP 62-275508. The pressure roll may be equipped with a cleaning mechanism. The cleaning mechanism is not limited, and examples thereof include a mechanism using an adhesive roll and the like.

It is preferred that the mixture sheet production apparatus for an electrochemical device of the present disclosure produce a product by winding the mixture sheets obtained through the press-fusing means as is using a winder, or, if necessary, by winding the mixture sheets after passing the sheets through a mechanism described in detail later using a winder.

The mixture sheet production apparatus for an electrochemical device of the present disclosure may further have other mechanisms in the production of the mixture sheets for an electrochemical device. Specifically, examples of mechanisms having an arbitrary configuration include a sheet forming mechanism that produces sheets, a sheet feeding mechanism for feeding mixture sheets to the stacking mechanism, and an adhesion mechanism that adheres the press-fused mixture sheets that have passed through the press-fusing mechanism to a current collector. In addition, the mixture sheet production apparatus for an electrochemical device of the present disclosure may also include, for the mixture to be introduced into the sheet forming mechanism, a kneading mechanism for uniformly mixing the various components, a stretching mechanism for stretching the sheet, a heating mechanism, and the like. These mechanisms will now be described in detail.

### (Sheet forming mechanism)

In the present disclosure, the mixture sheet production apparatus may have a sheet forming mechanism. The stacking mechanism performs a step of stacking sheet-shaped mixtures. The mixture sheet production apparatus of the present disclosure may have a mechanism for forming the sheets to be fed to the stacking mechanism. The sheet forming mechanism can feed the sheets formed into a sheet shape to the stacking mechanism as is without winding up the sheets.

The sheet forming mechanism is not limited, and any known mechanism can be used. Examples include a method of forming the sheets using parallel forming rolls that face each other, a method of forming the sheets by extrusion molding, a method of preparing a paste such as a slurry, coating the paste, and drying to form the sheets, and the like. The devices used in these methods are not limited, and any known devices can be used.

It is particularly preferred that the sheet forming mechanism is a mechanism that produces the mixture sheets using forming rolls. In such a case, it is possible to suitably form the sheets. An example of a mixture sheet production apparatus that has a sheet forming mechanism for forming a mixture sheet using such forming rolls is schematically shown in FIG. 8.

In the embodiment shown in FIG. 8, sheet forming is performed using forming rolls 3. Further, before sending to the forming roll, the raw materials constituting the mixture sheet may be kneaded by the kneader 1, and the kneaded raw materials may be fed to the forming rolls 3 via the hopper 2.

The mixture sheet production apparatus of the present disclosure may include two or more of the sheet production mechanisms described above. Thereby, two or more sheets can be fed to the stacking mechanism at the same time, and stacking can be performed efficiently.

### (Sheet feeding mechanism)

As described above, in addition to using a mixture sheet production apparatus for an electrochemical device that includes a sheet forming mechanism, a separately produced mixture sheet may be wound onto a roll temporarily, and while feeding out the mixture from the roll, the mixture sheet can also be fed to stacking means. Through such a method, the mixture sheets may be fed from the sheet feeding mechanism to the stacking mechanism. An apparatus having such a configuration may be used when there are space limitations for the apparatus or when it is difficult to perform all of the steps from sheet forming continuously.

The sheet feeding mechanism is not limited, and any known mechanism can be used as long as, for example, the mechanism can feed out a roll-shaped mixture sheet and sequentially feed it to the stacking mechanism. Further, the mixture sheet production apparatus for an electrochemical device may have only one sheet feeding mechanism, or may have two or more sheet feeding mechanisms. In the case of having two or more sheet feeding mechanisms, the stacking mechanism may stack a plurality of mixture sheets fed from each sheet feeding mechanism.

### (Kneading mechanism)

The mixture fed to the sheet forming mechanism of the present disclosure is preferably in a bulk state, and it is preferred that the various components constituting the mixture are mixed to a certain extent to form a cohesive state. In order to obtain such a bulk state, it is preferred that fibril formation in the binder resin has occurred to some extent. The mixture sheet production apparatus for an electrochemical device of the present disclosure may include a kneading mechanism for obtaining such a bulk mixture.

The kneading mechanism is a mechanism that uniformly mixes raw materials including a powdered binder resin by application of a shear force. That is, after the composition as a whole is made into a bulk state with a certain degree of cohesiveness by such a kneading mechanism, the mixture can be formed into a sheet shape.

The kneading mechanism is not limited, and any commonly known kneading mechanism can be used. Specific examples include a jet mill, a twin-screw kneader, a pressure kneader, a twin-screw kneading extruder, a V-type mixer, a high-speed mixer, a ribbon mixer, and the like. Among these, particularly preferred are a jet mill, a pressure kneader, and twin-screw kneading extruder, which are capable of forming granules while kneading. These kneading mechanisms are not limited, and commonly known kneading mechanisms can be used.

In the kneading mechanism, it is preferred that the raw material composition does not contain a liquid solvent, although a small amount of lubricant may be used. That is, a paste may be prepared by adding a lubricant to a powdered raw material mixture.

The lubricant is not limited, and examples thereof include water, an ether compound, an alcohol, an ionic liquid, a carbonate, an aliphatic hydrocarbon (solvent with low polarity such as heptane and xylene), an isoparaffinic hydrocarbon compound, and a petroleum fraction (gasoline (from 4 to 10 carbon atoms), naphtha (from 4 to 11 carbon atoms), kerosene/paraffin (from 10 to 16 carbon atoms), and mixtures thereof).

A moisture content of the lubricant is preferably 1,000 ppm or less.

It is preferred that the moisture content is 1,000 ppm or less because deterioration of battery performance is reduced. It is more preferred that the moisture content is 500 ppm or less.

In the case of using a lubricant, the amount of lubricant used can be, relative to the raw material composition, 5 to 35 parts by weight, preferably 10 to 30 parts by weight, and more preferably 15 to 25 parts by weight.

When the mixture sheet production apparatus of the present disclosure has the above-described kneading mechanism, the uniformly mixed bulk mixture obtained by the kneading mechanism may be continuously fed as is to the sheet feeding mechanism, or it may be collected in a bulk state temporarily and then fed to the sheet feeding mechanism.

### (Adhesion mechanism)

When the mixture sheet production apparatus of the present disclosure is an apparatus for producing an electrode, the mixture sheet production apparatus may have an adhesion mechanism for bonding the mixture sheets obtained by the method described above to a current collector. The mixture sheets obtained by the method described above can act as an electrode by bonding to a current collector. Therefore, the mixture sheets that have passed through the press-fusing mechanism may be continuously bonded to a current collector as is to form an electrode.

An example of a mixture sheet production apparatus having such an adhesion mechanism is schematically shown in FIG. 8. The mixture sheet production apparatus shown in FIG. 8 is a production apparatus in which a current collector 8 is laminated and adhered to the mixture sheets that have passed through a press-fusing mechanism 5, and the laminated sheets thus obtained are wound by a winder 7.

Examples of the material of the current collector include a metal material such as metals such as aluminum, titanium, tantalum, stainless steel, and nickel, or alloys thereof; a carbon material such as carbon cloth and carbon paper, and the like. Among these, a metal material, particularly aluminum or alloys thereof, are preferred. The current collector may be subjected to surface treatments such as forming an adhesive layer on the surface of the foil to improve adhesion, roughening the surface by polishing, and forming a pattern by transferring or etching. Further, the mixture production apparatus of the present disclosure may include a surface treatment for treating the surface of the current collector. The adhesion mechanism is a mechanism for adhering a positive electrode current collector composed of these materials to the mixture sheets. The adhesion is preferably performed using an adhesive. The specific method of the adhesion mechanism is not limited, and examples include pressure bonding using a roll.

### (Stretching mechanism)

The mixture sheet production apparatus of the present disclosure may have a stretching mechanism. Stretching is preferable in that the sheet can be made thinner.

When a stretching mechanism is provided, the stretching mechanism may be operated at a stage before the stacking mechanism or at a stage after the press-fusing mechanism. It is more preferred to provide the stretching mechanism at stage after the press-fusing mechanism. Stretching after the press-fusing mechanism is preferred in that the sheet strength tends to be improved and breakage during stretching is less likely to occur.

The stretching mechanism is not limited, and uniaxial stretching, biaxial stretching, and the like can be used.

### (Heating mechanism)

The mixture sheet production apparatus of the present disclosure may have a heating mechanism after the press-fusing step. By heating a target mixture sheet after the sheet is produced in the press-fusing step, volatile components produced during the processing of the mixture sheet can be removed. Further, a solvent may be used in preparing the mixture sheet, but such a solvent can be removed by the heating step.

The heating can be performed by any method, such as a method of continuously feeding to a heating furnace or a method of heating with a heating roll. The heating temperature is preferably in the range of 30 to 250°C, more preferably in the range of 50 to 230°C, and further preferably in the range of 70 to 200°C.

### (Applications of mixture sheet production apparatus for electrochemical device)

The mixture sheet production apparatus for an electrochemical device of the present disclosure can be widely used in relevant applications, but in particular it is particularly suitable used for producing a mixture sheet composed of a composition containing a binder resin that forms fibrils. The binder resin is not limited, and examples thereof may include polytetrafluoroethylene resin (hereinafter referred to as PTFE) and ultra-high molecular weight polyethylene, and PTFE is preferred. The PTFE will be described in detail in the description regarding the production method below.

### (Production method)

The present disclosure also relates to a method for producing a mixture sheet.

The method for producing a mixture sheet of the present disclosure includes: a step (1) of stacking two or more mixture sheets; and a step (2) of integrating the mixture sheets obtained in step (1) by applying heat and pressure.

That is, by stacking a plurality of mixture sheets and then applying pressure, a mixture with few defects and good performance can be obtained. In such a method for producing a mixture sheet, it is preferred to use the above-described mixture production apparatus. Each of step (1) and step (2) can be carried out according to the method described above for the mixture production apparatus.

Each component used when carrying out the method for producing a mixture sheet of the present disclosure will now be described in detail below. The mixture of the present disclosure contains a binder resin. The binder resin is a resin that forms fibrils by application of a shear force. Specifically, the binder resin is preferably PTFE or ultra-high molecular weight polyethylene, and PTFE is preferred.

In the present disclosure, the PTFE is not limited, and may be a homopolymer or a copolymer that can form fibrils, but a homopolymer is more preferred.

In the case of a copolymer, examples of fluorine atom-containing monomers that are co-monomers include chlorotrifluoroethylene, hexafluoropropylene, fluoroalkylethylene, perfluoroalkylethylene, fluoroalkyl-fluorovinyl ether, and the like.

It is preferred that the powdered PTFE serving as a raw material for preparing the mixture of the present disclosure has a standard specific gravity of 2.11 to 2.20. Having a standard specific gravity within the above range is advantageous in that a mixture sheet having a high strength can be produced. The lower limit of the standard specific gravity is more preferably not less than 2.12. The upper limit of the standard specific gravity is more preferably not more than 2.19, and even more preferably not more than 2.18.

The standard specific gravity (SSG) is measured by preparing a sample according to ASTM D-4895-89, and measuring the specific gravity of the obtained sample by the water displacement method.

The powdered PTFE includes preferably 50% by mass or more, and more preferably 80% by mass or more, of PTFE having a secondary particle size of 500 µm or more. When the PTFE having a secondary particle size of 500 µm or more is within the above range, there is an advantage that a high-strength mixture sheet can be produced. By using PTFE with a secondary particle size of 500 µm or more, it is possible to obtain a mixture sheet with lower resistance and high toughness.

In the powdered PTFE used as a raw material when preparing the mixture of the present disclosure, a moisture content thereof is preferably 500 ppm or less. It is preferred that the moisture content is 500 ppm or less since this enables a secondary battery having a low level of gas generation as an initial characteristic to be produced. More preferably, the moisture content is 300 ppm or less.

The lower limit of the secondary particle size is more preferably 300 µm, and further preferably 350 µm. The upper limit of the secondary particle size is more preferably not more than 700 µm, and further preferably not more than 600 µm. The secondary particle size can be determined, for example, by a sieving method.

The powdered PTFE has an average primary particle size of preferably 150 nm or more because this allows a mixture sheet having higher strength and excellent homogeneity to be obtained. More preferably, the average primary particle size is 180 nm or more, further preferably 210 nm or more, and particularly preferably 220 nm or more.

The larger the average primary particle size of the PTFE, the more the paste extrusion pressure can be suppressed and the better the moldability is when extrusion-forming a paste using the powder. The upper limit may be 500 nm, but is not limited thereto. From the viewpoint of productivity in the polymerization step, the upper limit is preferably 350 nm.

The average primary particle size can be determined by, using an aqueous dispersion of PTFE obtained by polymerization, creating a calibration curve plotting the transmission of 550 nm incident light with respect to the unit length of the aqueous dispersion having a polymer concentration adjusted to 0.22% by mass versus the average primary particle size determined by measuring the directional diameter in a transmission-type electron micrograph, and measuring the transmission of the aqueous dispersion to be measured.

The PTFE used in the present disclosure may have a core-shell structure. Examples of PTFE having a core-shell structure include a modified polytetrafluoroethylene that includes in the particle a core of high molecular weight polytetrafluoroethylene and a shell of a lower molecular weight polytetrafluoroethylene or modified polytetrafluoroethylene. Examples of the modified polytetrafluoroethylene include the polytetrafluoroethylenes described in Japanese Translation of PCT International Application Publication No. 2005-527652.

Powdered PTFE that satisfies each of the above-described parameters can be obtained by a conventional manufacturing method. For example, such powdered PTFE may be produced in accordance with the production methods described in International Publication No. WO 2015-080291, International Publication No. WO 2012-086710, and the like.

Examples of commonly sold PTFE include F-104, F-106, F-107, F-104C, F-121, F-201, F-205, F-208, F-302, D-111, D-210C, D-310, D-711, and the like, which are manufactured by Daikin Industries, Ltd., 60X, 601X, 602X, 605XTX, 613AX, 62X, 62NX, 62XTX, 640XTX, 641XTX, 650XTX, 669X, 669NX, 6CX, 6CNX, CFP6000X, 6J, 6CJ, 62J, 640J, 641J, DISP40, DISP35, DISP33, DISP30, 31-JR, and the like, which are manufactured by Chemours, TF2029, TF2025Z, TF2053Z, TF2073Z, TF2001Z, TF2071USZ, TF2072Z, TF5033Z, YF5035Z, TF5060GZ, TF5070GZ, TFM5001GZ, TF5066GZ, TF5032Z, TF5041GZ, TF 5035GZ, TF5135GZ, TF5050Z, TF5041Z, and the like, which are manufactured by 3M, DF681F, DF680F, DF330F, DF291F, DF230F, DF210F, DF132F, DF130F, DF120F, D1610F, D1614F, D2512F, D2711F, D3511F, D1613F, D2510F, D2711F, and the like, which are manufactured by Solvay, CD145, CD123, CD126E, CD097, CD084E, CD086EL, CD086EH, CD090E, CD122E, CD141E, CD127E, AD911E, AD915E, AD916E, AD939E, AD132E, AD309E, AD650E, which are manufactured by AGC.

Examples of commonly sold ultra-high molecular weight polyethylene include TIVAR UHMW-PE and the like, manufactured by Mitsubishi Chemical Advanced Materials, and HI-ZEX MILLION, manufactured by Mitsui Chemicals.

The secondary battery mixture of the present disclosure contains, in addition to the binder resin, the various components constituting the intended sheet. For example, in the case of an electrode mixture, the mixture may contain an electrode active material, a conductive aid, and the like. Further, in the case of an electrode for a solid-state battery, the mixture may contain a solid-state electrolyte. In addition, in the case of an electrolyte layer in a solid-state battery, the mixture may contain a solid-state electrolyte.

The mixture sheet produced by the present disclosure may be a positive electrode or a negative electrode, or may be a solid-state electrolyte layer in an all-solid-state battery.

Examples of each of these components that can be used in the mixture sheet produced in the present disclosure are described in detail below. In the present disclosure, the mixture sheet can be obtained by mixing the following components to prepare a mixture.

### (Electrode active material)

The positive electrode active material is not limited as long as it can electrochemically absorb and desorb alkali metal ions. For example, a material containing an alkali metal and at least one transition metal is preferred. Specific examples include an alkali metal-containing transition metal composite oxides, an alkali metal-containing transition metal phosphate compound, a conductive polymer, and the like.

Among them, as the positive electrode active material, an alkali metal-containing transition metal composite oxide that produces a high voltage is particularly preferable. Examples of the alkali metal ions include lithium ions, sodium ions, and potassium ions. In a preferred embodiment, the alkali metal ions may be lithium ions. That is, in this embodiment, the alkali metal ion secondary battery is a lithium ion secondary battery.

Examples of the alkali metal-containing transition metal composite oxide include:
a lithium-manganese spinel composite oxide represented by the formula:

   MₐMn_{2-b}M¹_{b}O₄
wherein M is at least one metal selected from the group consisting of Li, Na and K, 0.9≤a; 0≤b≤1.5, and M¹ is at least one metal selected from the group consisting of Fe, Co, Ni, Cu, Zn, Al, Sn, Cr, V, Ti, Mg, Ca, Sr, B, Ga, In, Si, and Ge,
a lithium-nickel composite oxide represented by the formula:

   MNi_{1-c}M²cO₂
wherein M is at least one metal selected from the group consisting of Li, Na and K, 0≤c≤0.5, and M² is at least one metal selected from the group consisting of Fe, Co, Mn, Cu, Zn, Al, Sn, Cr, V, Ti, Mg, Ca, Sr, B, Ga, In, Si, and Ge, or
a lithium-cobalt composite oxide represented by the formula:

   MCo_{1-d}M³_{d}O₂
wherein M is at least one metal selected from the group consisting of Li, Na and K, 0≤d≤0.5, and M³ is at least one metal selected from the group consisting of Fe, Ni, Mn, Cu, Zn, Al, Sn, Cr, V, Ti, Mg, Ca, Sr, B, Ga, In, Si, and Ge. In the above, M is preferably one metal selected from the group consisting of Li, Na and K, more preferably Li or Na, and further preferably Li.

Among these, from the viewpoint of being able to provide a secondary battery with high energy density and high output, MCoO₂, MMnO₂, MNiO₂, MMn₂O₄, MNi_{0.8}Co_{0.15}Al_{0.05}O₂, MNi_{1/3}Co_{1/3}Mn_{1/3}O₂ and the like are preferable, and a compound represented by the following general formula (3) is preferred:

MNiₕCoᵢMnⱼM⁵ₖO₂ (3)

wherein M is at least one metal selected from the group consisting of Li, Na and K; M⁵ represents at least one selected from the group consisting of Fe, Cu, Zn, Al, Sn, Cr, V, Ti, Mg, Ca, Sr, B, Ga, In, Si, and Ge, (h+i+j+k)=1.0, 0≤h≤1.0, 0≤i≤1.0, 0≤j≤1.5, and 0≤k≤0.2.

Examples of the alkali metal-containing transition metal phosphate compound include compounds represented by the following formula (4):

MₑM⁴_{f}(PO₄)_{g}

wherein M is at least one metal selected from the group consisting of Li, Na and K, M⁴ is at least one selected from the group consisting of V, Ti, Cr, Mn, Fe, Co, Ni, and Cu, 0.5≤e≤3, 1≤f≤2, and 1≤g≤3. In the above, M is preferably one metal selected from the group consisting of Li, Na and K, more preferably Li or Na, and further preferably Li.

The transition metal of the lithium-containing transition metal phosphate compound is preferably V, Ti, Cr, Mn, Fe, Co, Ni, Cu, or the like. Specific examples include iron phosphates such as LiFePO₄, Li₃Fe₂(PO₄)₃, and LiFeP₂O₇, cobalt phosphates such as LiCoPO₄, and lithium-containing transition metal phosphate compounds in which a part of the transition metal atoms that are the main component of these lithium-transition metal phosphate compounds is replaced with another element such as Al, Ti, V, Cr, Mn, Fe, Co, Li, Ni, Cu, Zn, Mg, Ga, Zr, Nb, or Si.

The lithium-containing transition metal phosphate compound preferably has an olivine structure.

Examples of other positive electrode active materials include MFePO₄, MNi_{0.8}Co_{0.2}O₂, M_{2.2}Fe_{0.4}Mn_{0.4}O₂, MNi_{0.5}Mn_{1.5}O₂, MV₃O₆, and M₂MnO₃ and the like. In particular, positive electrode active materials such as M₂MnO₃ and MNi_{0.5}Mn_{1.5}O₂ are preferable from the viewpoint that the crystal structure does not collapse when the secondary battery is operated at a voltage exceeding 4.4 V or 4.6 V or higher. Therefore, electrochemical devices such as secondary batteries using a positive electrode material including the positive electrode active material exemplified above are preferable because even when they are stored at high temperatures, they are less likely to suffer a decrease in remaining capacity, less likely to undergo a change in resistance increase rate, and do not suffer from a decrease in battery performance even when operated at a high voltage.

Examples of other positive electrode active materials include a solid solution material of M₂MnO₃ with MM⁶O₂ (where M is at least one metal selected from the group consisting of Li, Na and K, and M⁶ is a transition metal such as Co, Ni, Mn, or Fe), and the like.

Examples of the solid solution material include alkali metal-manganese oxides represented by the general formula Mx[Mn_{(1-y)}M⁷_{y}]O_{z}. Here, M is at least one metal selected from the group consisting of Li, Na and K, and M⁷ includes at least one metal element other than M and Mn and one or two or more elements selected from the group consisting of Co, Ni, Fe, Ti, Mo, W, Cr, Zr, and Sn. Further, the values of x, y, and z in the formula are in the ranges of 1<x<2, 0≤y<1, and 1.5<z<3. Among them, a manganese-containing solid solution material such as Li_{1.2}Mn_{0.5}Co_{0.14}Ni_{0.14}O₂ in which Li₂MnO₃ is dissolved as a solid solution in a base of LiNiO₂ or LiCoO₂ is preferable from the viewpoint that an alkali metal ion secondary battery having a high energy density can be provided.

Further, it is preferable to include lithium phosphate in the positive electrode active material because continuous charging characteristics are improved. Although the use of lithium phosphate is not limited, it is preferable to use a mixture of the above-described positive electrode active material and lithium phosphate. The lower limit of the amount of lithium phosphate used is preferably not less than 0.1% by mass, more preferably not less than 0.3% by mass, and further preferably not less than 0.5% by mass, based on the total of the positive electrode active material and lithium phosphate. The upper limit is preferably not more than 10% by mass, more preferably not more than 8% by mass, and further preferably not more than 5% by mass, based on the total of the positive electrode active material and lithium phosphate.

Examples of the conductive polymer include a p-doped conductive polymer and an n-doped conductive polymer. Examples of the conductive polymer include a polyacetylene-based polymer, a polyphenylene-based polymer, a heterocyclic polymer, an ionic polymer, a ladder polymer, a network polymer, and the like.

The positive electrode active material may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

These surface-attached substances can be attached to the surface of the positive electrode active material by, for example, a method of dissolving or suspending the substance in a solvent, impregnating or adding it to the positive electrode active material, and drying, or a method of dissolving or suspending a precursor of the surface-attached substance in a solvent, impregnating or adding it to the positive electrode active material, and then causing the surface-attached substance to react by heating or the like, or a method of attaching the substance to the surface of the positive electrode active material by sintering the substance at the same time as adding it to a precursor of the positive electrode active material. In addition, in the case of attaching carbon, a method of mechanically attaching carbonaceous matter in the form of activated carbon or the like later can also be used.

Based on the mass relative to the positive electrode active material, the lower limit of the amount of the surface-attached substance is preferably not less than 0.1 ppm, more preferably not less than 1 ppm, and further preferably not less than 10 ppm, and the upper limit is preferably not more than 20%, more preferably not more than 10%, and further preferably not more than 5%. The surface-attached substance can inhibit an oxidation reaction between the electrolytic solution at the surface of the positive electrode active material, which enables battery life to be improved. If the attached amount is too small, the effect may not be sufficiently exhibited, and if the attached amount is too large, the resistance may increase due to absorption/desorption of the lithium ions being inhibited.

Examples of the shape of the particles of the positive electrode active material include conventionally used shapes, such as mass-shaped, polyhedral, spherical, oval, plate-shaped, needle-shaped, and columnar-shaped. Further, primary particles may be aggregated to form secondary particles.

The tapped density of the positive electrode active material is preferably 0.5 g/cm³ or more, more preferably 0.8 g/cm³ or more, and further preferably 1.0 g/cm³ or more. If the tapped density of the positive electrode active material is lower than this lower limit, the required amounts of the conductive material and the binder resin may increase, the filling ratio of the positive electrode active material to the positive electrode active material layer may be limited, and the battery capacity may be limited. By using a complex oxide powder with a high tapped density, a high density positive electrode active material layer can be formed. Generally, the higher the tapped density, the better. However, although there is no upper limit, if the tapped density is too large, the diffusion of lithium ions in the positive electrode active material layer using the electrolytic solution as a medium becomes rate-determining, and the load characteristics tend to deteriorate. Therefore, the upper limit is preferably not more than 4.0 g/cm³, more preferably not more than 3.7 g/cm³, and further preferably not more than 3.5 g/cm³.

In the present disclosure, the tapped density is determined as the powder filling density (tapped density) g/cm³ when 5 to 10 g of the positive electrode active material powder is placed in a 10 ml glass graduated cylinder and tapped 200 times with a stroke of about 20 mm.

The median diameter d50 of the particles of the positive electrode active material (secondary particle size when primary particles aggregate to form secondary particles) is preferably 0.3 µm or more, more preferably 0.5 µm or more, further preferably 0.8 µm or more, and most preferably 1.0 µm or more, and is preferably 30 µm or less, more preferably 27 µm or less, further preferably 25 µm or less, and most preferably 22 µm or less. If the median diameter d50 is less than this lower limit, it may not be possible to obtain a high tapped density product, and if the median diameter d50 exceeds the upper limit, it takes time for the lithium to diffuse within the particles, which may result in problems such as a decrease in battery performance. Here, by mixing two or more types of the above-described positive electrode active material having different median diameters d50, the filling property at the time of forming the positive electrode can be further improved.

In addition, in the present disclosure, the median diameter d50 is measured by a known laser diffraction/scattering particle size distribution measurement apparatus. When the LA-920 manufactured by HORIBA is used as a particle size distribution analyzer, a 0.1% by mass sodium hexametaphosphate aqueous solution is used as a dispersion medium for measurement, and the measurement is carried out by setting a measurement refractive index of 1.24 after performing ultrasonic dispersion for 5 minutes.

In a case in which primary particles aggregate to form secondary particles, the average primary particle size of the positive electrode active material is preferably 0.05 µm or more, more preferably 0.1 µm or more, and further preferably 0.2 µm or more. The upper limit is preferably not more than 5 µm, more preferably not more than 4 µm, further preferably not more than 3 µm, and most preferably not more than 2 µm. If the upper limit is exceeded, it is difficult to form spherical secondary particles, which adversely affects the powder filling property and greatly reduces the specific surface area, and as a result there may be an increased possibility of a decrease in battery performance such as output characteristics. Conversely, if the average primary particle size is lower than the above-described lower limit, problems such as poor reversibility of charge/discharge may occur due to underdevelopment of crystals.

In addition, in the present disclosure, the average primary particle is measured by observation using a scanning electron microscope (SEM). Specifically, the average primary particle size is determined by, in a photograph at a magnification of 10,000 times, determining the value of the maximum length of a section formed by the left and right boundary lines of the primary particles with respect to a straight line in the horizontal direction for 50 arbitrary primary particles, and taking the average value thereof.

The BET specific surface area of the positive electrode active material is preferably 0.1 m²/g or more, more preferably 0.2 m²/g or more, and further preferably 0.3 m²/g or more. The upper limit is preferably not more than 50 m²/g, more preferably not more than 40 m²/g, and further preferably not more than 30 m²/g. If the BET specific surface area is smaller than this range, battery performance tends to decrease. If the BET specific surface area is larger than this range, it is harder for the tapped density to increase.

In the present disclosure, the BET specific surface area is defined as the value obtained by, using a surface area meter (for example, a fully automatic surface area measurement apparatus manufactured by Okura Riken), pre-drying a sample at 150°C for 30 minutes under a nitrogen flow, and then performing the measurement by the nitrogen adsorption BET one-point method according to a gas flow method using a nitrogen-helium mixed gas precisely adjusted so that the value of the relative pressure of nitrogen to atmospheric pressure is 0.3.

When a secondary battery of the present disclosure is used as a large lithium ion secondary battery for a hybrid automobile or a distributed power source, a high output is required, and so it is preferred that the particles of the positive electrode active material are mainly secondary particles.

The particles of the positive electrode active material preferably include 0.5 to 7.0% by volume of fine particles having an average secondary particle size of 40 µm or less and an average primary particle size of 1 µm or less. By containing fine particles with an average primary particle size of 1 µm or less, the contact area with the electrolytic solution increases, so the diffusion of lithium ions between the mixture and the electrolytic solution can be made faster, and as a result the output performance of the battery can be improved.

As a method for producing the positive electrode active material, a general method for producing an inorganic compound is used. To produce a spherical or oval active material in particular, various methods are conceivable. For example, a transition metal raw material may be dissolved or pulverized and dispersed in a solvent such as water, the pH adjusted while stirring to prepare a spherical precursor, which is collected and optionally dried, the Li source such as LiOH, Li₂CO₃, or LiNO₃ is added, and then sintering is carried out at a high temperature to obtain the active material.

To produce the positive electrode, the above-described positive electrode active materials may be used singly, or in combinations of two or more thereof having different compositions in any combination or ratio. Preferred combinations in this case include a combination of LiCoO₂ and a ternary system such as LiNi_{0.33}Co_{0.33}Mn_{0.33}O₂, a combination of LiCoO₂ and LiMn₂O₄ or a material in which a part of the Mn are replaced with another transition metal or the like, or a combination of LiFePO₄ and LiCoO₂ or a material in which a part of the Co are replaced with another transition metal or the like.

From the viewpoint of high battery capacity, the content of the positive electrode active material in the positive electrode mixture is preferably 50 to 99.5% by mass, and more preferably 80 to 99% by mass.

Further, the content in the positive electrode active material layer is preferably 80% by mass or more, more preferably 82% by mass or more, and particularly preferably 84% by mass or more. The upper limit is preferably not more than 99% by mass, and more preferably not more than 98% by mass. If the content of the positive electrode active material in the positive electrode active material layer is low, the electric capacity may be insufficient. Conversely, if the content is too high, the strength of the positive electrode may be insufficient.

Examples of the negative electrode active material include, but are not limited to, any selected from lithium metal, carbonaceous matter materials such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor grown carbon fiber, natural graphite, and non-graphitizing carbon, silicon-containing compounds such as silicon and silicon alloys, Li₄Ti₅O₁₂, and the like, or a mixture of two or more types of these. Among them, those at least partially including a carbonaceous matter material and silicon-containing compounds can be particularly suitably used.

The negative electrode active material used in the present disclosure suitably contains silicon as a constituent element. By including silicon as a constituent element, a high capacity battery can be produced.

The material containing silicon is preferably silicon particles, particles having a structure in which fine particles of silicon are dispersed in a silicon-based compound, silicon oxide particles represented by the general formula SiOx (0.5≤x≤1.6), or mixtures thereof. By using such a material, a negative electrode mixture for a lithium-ion secondary battery having higher initial charge/discharge efficiency, higher capacity, and better cycle characteristics can be obtained.

The above-described silicon oxide is a general term for amorphous silicon oxide, and silicon oxide before disproportionation is represented by the general formula SiOx (0.5≤x≤1.6). x is preferably 0.8≤x<1.6, and more preferably 0.8≤x<1.3. This silicon oxide can be obtained, for example, by cooling and precipitating silicon monoxide gas produced by heating a mixture of silicon dioxide and metal silicon.

Particles having a structure in which fine particles of silicon are dispersed in a silicon-based compound can be obtained, for example, by firing a mixture of fine particles of silicon and a silicon-based compound, or by heat treating silicon oxide particles before disproportionation represented by the general formula SiOx at a temperature of 400°C or higher, suitably 800 to 1,100°C, in an inert, non-oxidizing atmosphere such as argon to carry out a disproportionation reaction. In particular, the material obtained by the latter method is suitable because the silicon microcrystals are uniformly dispersed. As a result of the disproportionation reaction, the size of silicon nanoparticles can be adjusted to 1 to 100 nm. The silicon oxide in the particles having a structure in which silicon nanoparticles are dispersed in silicon oxide is preferably silicon dioxide. It is also noted that the fact that silicon nanoparticles (crystals) are dispersed in amorphous silicon oxide can be confirmed by a transmission electron microscope.

The physical properties of the silicon-containing particles can be appropriately selected depending on the desired composite particles. For example, the average particle size is preferably 0.1 to 50 µm, and the lower limit is more preferably 0.2 µm or more, and further preferably 0.5 µm or more. The upper limit is more preferably 30 µm or less, and further preferably 20 µm or less. The average particle size in the present invention is expressed as a weight average particle size as determined by particle size distribution measurement using a laser diffraction method.

The BET specific surface area of the silicon-containing particles is preferably 0.5 to 100 m²/g, and more preferably 1 to 20 m²/g. If the BET specific surface area is 0.5 m²/g or more, there is no risk of a deterioration in battery characteristics due to a decrease in adhesiveness when coated on the electrode. Further, if the BET specific surface area is 100 m²/g or less, the proportion of silicon dioxide on the particle surface increases, and there is no risk of a decrease in battery capacity when used as a negative electrode material for a lithium ion secondary battery.

By covering the silicon-containing particles with carbon, electric conductivity is imparted, and battery characteristics are improved. Examples of methods for imparting electric conductivity include mixing with electrically conductive particles such as graphite, covering the surface of the silicon-containing particles with a carbon film, and combining both such methods. A method of covering with a carbon film is preferred, and a chemical vapor deposition (CVD) method is more preferred.

To increase the capacity of the obtained mixture, the content of the negative electrode active material in the mixture is preferably 40% by mass or more, more preferably 50% by mass or more, and particularly preferably 60% by mass or more. The upper limit is preferably not more than 99% by mass, and more preferably not more than 98% by mass.

### (Conductive aid)

As the conductive aid, any known conductive material can be used. Specific examples include metal materials such as copper and nickel, and carbon materials, for example, graphite such as natural graphite and artificial graphite, carbon black such as acetylene black, ketjen black, channel black, furnace black, lamp black, and thermal black, and amorphous carbons such as needle coke, carbon nanotubes, fullerenes, and VGCF. These may be used singly, or in combinations of two or more thereof in any combination and ratio.

The conductive aid is used such that it has a content in the mixture of usually 0.01% by mass or more, preferably 0.1% by mass or more, and more preferably 1% by mass or more, and usually 50% by mass or less, preferably 30% by mass or less, and more preferably 15% by mass or less. If the content is lower than this range, the electric conductivity may be insufficient. Conversely, if the content is higher than this range, the battery capacity may decrease.

### (Solid-state electrolyte)

The solid-state electrolyte used in the all-solid-state secondary battery mixture of the present disclosure may be a sulfide-based solid-state electrolyte or an oxide-based solid-state electrolyte. In particular, when using a sulfide-based solid-state electrolyte, there is an advantage in that there is flexibility.

The sulfide-based solid-state electrolyte is not limited, and may be selected from any of Li₂S-P₂S₅, Li₂S-P₂S₃, Li₂S-P₂S₃-P₂S₅, Li₂S-SiS₂, LiI-Li₂S-SiS₂, LiI-Li₂S-P₂S₅, LiI-Li₂S-P₂O₅, LiI-Li₃PO₄-P₂S₅, LiI-Li₂S-SiS₂-P₂S₅, Li₂S-SiS₂-Li₄SiO₄, Li₂S-SiS₂-Li₃PO₄, Li₃PS₄-Li₄GeS₄, Li_{3.4}P_{0.6}Si_{0.4}S₄, Li_{3.25}P_{0.25}Ge_{0.76}S₄, Li₄-xGe₁₋ₓPₓS₄ (X = 0.6 to 0.8), Li_{4+y}Ge_{1-y}Ga_{y}S₄ (y = 0.2 to 0.3), LiPSCl, LiCl, Li_{7-x-2y}PS_{6-x-y}Clₓ (0.8≤x≤1.7, 0<y≤-0.25x+0.5), and the like, or a mixture of two or more types can be used.

The sulfide-based solid-state electrolyte preferably contains lithium. Lithium-containing sulfide-based solid-state electrolytes are used in solid-state batteries that use lithium ions as carriers, and are particularly preferred for electrochemical devices having a high energy density.

The above-described oxide-based solid-state electrolyte is preferably a compound that contains an oxygen atom (O), has the ion-conducting property of a metal belonging to Group 1 or Group 2 of the Periodic Table, and has an electron-insulating property.

Specific examples of the compounds include LiₓₐLa_{ya}TiO₃ [xa = 0.3 to 0.7 and ya = 0.3 to 0.7] (LLT), Li_{xb}La_{yb}Zr_{zb}M^{bb}_{mb}O_{nb} (M^{bb} is at least one or more element of Al, Mg, Ca, Sr, V, Nb, Ta, Ti, Ge, In or Sn, xb satisfies 5≤xb≤10, yb satisfies 1≤yb≤4, zb satisfies 1≤zb≤4, mb satisfies 0≤mb≤2, and nb satisfies 5≤nb≤20), Li_{xc}B_{yc}M^{cc}_{zc}O_{nc} (M^{cc} is at least one or more element of C, S, Al, Si, Ga, Ge, In, or Sn, xc satisfies 0≤xc≤5, yc satisfies 0≤yc≤1, zc satisfies 0≤zc≤1, and nc satisfies 0≤nc≤6), Li_{xd}(Al, Ga)_{yd} (Ti, Ge)_{zd}Si_{ad}P_{md}O_{nd} (however, 1≤xd≤3, 0≤yd≤2, 0≤zd≤2, 0≤ad≤2, 1≤md≤7, 3≤nd≤15), Li₍₃₋₂ₓₑ₎M^{ee}ₓₑD^{ee}O (xe represents a number of 0 or more and 0.1 or less, and M^{ee} represents a divalent metal atom; and D^{ee} represents a halogen atom or a combination of two or more halogen atoms), Li_{xf}Si_{yf}O_{zf} (1≤xf≤5, 0≤yf≤3, 1≤zf≤10), Li_{xg}S_{yg}O_{zg} (1≤xg≤3, 0≤yg≤2, 1≤zg≤10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w satisfies w<1), Li_{3.5}Zn_{0.25}GeO₄ having a lithium super ionic conductor (LISICON)-type crystal structure, La_{0.51}Li_{0.34}TiO_{2.94} or La_{0.55}Li_{0.35}TiO₃ having a perovskite-type crystal structure, LiTi₂P₃O₁₂ having a natrium super ionic conductor (NASICON)-type crystal structure, Li_{1+xh+yh}(Al, Ga)ₓₕ(Ti, Ge)₂₋ₓₕSi_{yh}P_{3-yh}O₁₂ (0≤xh≤1, 0≤yh≤1), Li₇La₃Zr₂O₁₂ (LLZ) having a garnet-type crystal structure. Further, ceramic materials in which an element is substituted into the LLZ are also known. Examples of such ceramic materials include LLZ-based ceramic materials in which at least one element of Mg (magnesium) and A (A is at least one element selected from the group consisting of Ca (calcium), Sr (strontium), and Ba (barium)) is substituted into the LLZ. In addition, phosphorus compounds containing Li, P, and O are also desirable. Examples thereof include lithium phosphate (Li₃PO₄), LiPON in which some of oxygen atoms in lithium phosphate are substituted with nitrogen, LiPOD¹ (D¹ is at least one element selected from Ti, V, Cr, Mn, Fe, Co, Ni, Cu, Zr, Nb, Mo, Ru, Ag, Ta, W, Pt, Au, or the like), and the like. It is also possible to preferably use LiA¹ON (A¹ represents at least one element selected from Si, B, Ge, Al, C, Ga, or the like) and the like. Specific examples include Li₂O-Al₂O₃-SiO₂-P₂O₅-TiO₂-GeO₂, Li₂O-Al₂O₃-SiO₂-P₂O₅-TiO₂ and the like.

The oxide-based solid-state electrolyte preferably contains lithium. Lithium-containing oxide-based solid-state electrolytes are used in solid-state batteries that use lithium ions as carriers, and are particularly preferred for electrochemical devices having a high energy density.

The oxide-based solid-state electrolyte is preferably an oxide having a crystal structure. Oxides having a crystal structure are particularly preferred in terms of having a good Li ion-conducting property. Examples of oxides having a crystal structure include perovskite type (La_{0.51}Li_{0.34}TiO_{2.94} etc.), NASICON type (Li_{1.3}Al_{0.3}Ti_{1.7}(PO₄)₃ etc.), garnet type (Li₇La₃Zr₂O₁₂ (LLZ), etc.), and the like. Among them, the NASICON type is preferable.

The volume average particle size of the oxide-based solid-state electrolyte is not limited, but is preferably 0.01 µm or more, and more preferably 0.03 µm or more. The upper limit is preferably 100 µm or less, and more preferably 50 µm or less. The average particle size of the oxide-based solid-state electrolyte particles is measured by the following procedure. A dispersion is prepared by diluting the oxide-based solid-state electrolyte particles with water (heptane for materials unstable in water) to 1% by mass in a 20 ml sample bottle. Ultrasonic waves of 1 kHz are applied on the diluted dispersion sample for 10 minutes, and the test is immediately carried out after that. Using the dispersion sample, a laser diffraction/scattering particle size distribution measurement apparatus LA-920 (manufactured by HORIBA) is used to acquire data 50 times using a quartz cell for measurement at a temperature of 25°C to obtain the volume average particle size. For other detailed conditions, refer to the description of JIS Z8828:2013 "Particle size analysis-dynamic light scattering method" if necessary. Five samples are prepared for each level and the average value is taken.

The above-described all-solid-state secondary battery mixture is particularly suitable for a lithium-ion all-solid-state secondary battery, and is also suitable for a sulfide-based all-solid-state secondary battery.

### (Other components)

The mixture may further include a thermoplastic resin. Examples of the thermoplastic resin include vinylidene fluoride, polypropylene, polyethylene, polystyrene, polyethylene terephthalate, and polyethylene oxide. These may be used singly, or in combinations of two or more thereof in any combination and ratio. Further, a cellulose derivative such as carboxymethylcellulose, polyacrylic acid, guar gum, xanthan gum, and the like may be included as a binder. By including these components, the strength of the mixture sheet and the adhesion to the current collector can be increased. It is noted that "binder" as used herein does not correspond to the above-described "binder resin."

The proportion of the other components to the mixture is in the range of usually 0.01% by mass or more, preferably 0.05% by mass or more, and more preferably 0.10% by mass or more, and is in the range of usually in 3.0% by mass or less, preferably 2.5% by mass or less, and more preferably 2.0% by mass or less. By adding a thermoplastic resin, the mechanical strength of the electrode can be improved. Further, if this range is exceeded, the proportion of the electrode active material in the mixture will decrease, which may cause problems such as a decrease in battery capacity and an increase in resistance between active materials.

In the mixture of the present disclosure, as a proportion of the binder resin in the mixture, the content of the binder resin is usually 0.1% by mass or more, preferably 0.2% by mass or more, and more preferably 0.3% by mass or more, and is usually 50% by mass or less, preferably 30% by mass or less, more preferably 10% by mass or less, and most preferably 5% by mass or less. If the proportion of the binder is too low, the mixture active material cannot be sufficiently retained, resulting in the mixture sheet having insufficient mechanical strength, which can cause battery performance such as cycle characteristics to deteriorate. On the other hand, if the proportion of the binder is too high, this can lead to a decrease in battery capacity and electric conductivity.

In the mixture production method of the present disclosure, a powder that has a binder resin and a conductive aid as essential components may be prepared by processing in advance, and the mixture sheet may be prepared using this as a raw material.

By using such powder as a binder, the conductive aid is uniformly present in the finally obtained mixture sheet. This is preferred because high electric conductivity can be maintained.

When the binder used in the present disclosure is a powder that has a binder resin and a conductive aid as essential components, the composition that has PTFE and a conductive aid as essential components may be in the form of a powder. The state of the powder is not limited, but it is particularly preferred that the particles be in a granulated state by spray drying.

The binder resin preferably contains the PTFE and the conductive aid in a weight ratio of 99:1 to 50:50. This mixing ratio is preferably 95:5 to 60:40, and more preferably 90:10 to 70:30.

The method for producing the binder resin is not limited, and the binder resin can be produced by any method. Among them, it is preferred that the binder resin is produced by a method that includes a step (A) of mixing the PTFE and the conductive aid in the presence of a liquid medium. In this case, examples of the method include a method of adding and mixing a powder of the conductive aid into a liquid dispersion of the PTFE, a method of mixing a liquid dispersion of the PTFE and a liquid dispersion of the conductive aid, and the like.

The mixing method may be carried out by a general method. Examples include, but are not limited to, mixers such as a disperser, a homomixer, and a planetary mixer, homogenizers, wet jet mills, and the like.

In the above step (A), a dispersion that has PTFE, a conductive aid, and a liquid medium as essential components is used. Preferably, such a dispersion has a total amount of the PTFE and the conductive aid of 1 to 60% by weight, relative to the total amount of the PTFE, the conductive aid, and the liquid medium. The lower limit is more preferably 2% by weight, and further preferably 3% by weight. The upper limit is more preferably 50% by weight, and further preferably 30% by weight.

Mixing these components in a liquid medium is preferred because the PTFE and the conductive aid can be mixed with high uniformity. Preferably, the liquid medium in such mixing is water.

In this case, the PTFE used as a raw material is preferably an aqueous dispersion obtained by emulsion polymerization.

It is preferred that the PTFE used as a raw material for the binder has an average primary particle size of 150 nm or more because this allows a mixture sheet having higher strength and excellent homogeneity to be obtained.

More preferably, the average primary particle size is 180 nm or more, further preferably 210 nm or more, and particularly preferably 220 nm or more.

The larger the average primary particle size of PTFE, the more the paste extrusion pressure can be suppressed and the better the moldability is when extrusion-forming a paste using the powder. The upper limit may be 500 nm but is not limited thereto. From the viewpoint of productivity in the polymerization step, the upper limit is preferably 350 nm.

The average primary particle size can be determined by, using an aqueous dispersion of PTFE obtained by polymerization, creating a calibration curve plotting the transmission of 550 nm incident light with respect to the unit length of the aqueous dispersion having a polymer concentration adjusted to 0.22% by mass versus the average primary particle size determined by measuring the directional diameter in a transmission-type electron micrograph, and measuring the transmission of the aqueous dispersion to be measured.

It is preferred that the mixture of the PTFE and the conductive aid mixed in the liquid medium in step (A) is then dried by spray drying (step (B)) to remove the liquid medium. Examples of the drying method include a tray dryer, a vacuum dryer, a freeze dryer, a hot air dryer, a drum dryer, a spray dryer, and the like. Particularly preferred is spray drying. Spray drying is a method of producing a dry powder by spraying a liquid/solid mixture into a gas to rapidly dry.

This enables a powder binder to be obtained in which the PTFE and the conductive aid are uniformly mixed. Spray drying is a generally widely known method, and can be carried out using any known device in a conventional manner. The above step (B) can be performed by a general method using a known general device. The drying temperature is preferably in a range of, for example, 100°C or higher and 250°C or lower. A temperature of 100°C or higher is preferred because the solvent can be sufficiently removed, and a temperature of 250°C or lower is preferred because energy consumption can be reduced more. The drying temperature is more preferably 110°C or higher, and more preferably 220°C or lower. Further, the feed liquid amount may be in a range of, for example, 0.1 L/h or more and 2 L/h or less, although the amount depends on the scale of production. Further, the nozzle size for spraying the prepared solution may be, for example, in the range of 0.5 mm or more and 5 mm or less in diameter, although the size depends on the scale of production.

A moisture content of the resin binder thus obtained is preferably 1,000 ppm or less.

It is preferred that the moisture content is 1,000 ppm or less since this enables a secondary battery having a low level of gas generation as an initial characteristic to be produced.

More preferably, the moisture content is 500 ppm or less.

### [Measurement of moisture content]

Using a Karl Fischer moisture meter (ADP-511/MKC-510N, manufactured by Kyoto Electronics Industry Manufacturing Co., Ltd.) equipped with a boat-type moisture vaporizer, the moisture content of the binder was measured by heating to 210°C with the moisture vaporizer and measuring the vaporized moisture. Nitrogen gas was flowed as the carrier gas at a flow rate of 200 mL/min, and the measurement time was 30 min. Chem-Aqua was used as the Karl Fischer reagent. The sample amount was 1.5 g.

It is preferred that the mixture containing each of the components described above is uniformly mixed by the above-described kneading mechanism into a bulk state, and that this is formed into a sheet shape by the above-described sheet forming mechanism.

Molding into a bulk state means that the raw materials constituting the electrode form a single lump. Moreover, the "bulk state" is not specified in terms of its shape. It suffices that the "bulk state" is in the state of single mass-shaped, and examples of its form include a rod-shaped, sheet-shaped, spherical-shaped, cube-shaped, and the like.

The mixture obtained by the above-described method for producing a mixture sheet of the present disclosure preferably has PTFE having a fibrous structure with a fibril diameter (median value) of 70 nm or less as a constituent element. The presence of the PTFE with such a small fibril diameter in the mixture is particularly preferred because this has an effect of binding the powders of the components constituting the mixture and of imparting flexibility. As a result, the object of the present invention is achieved.

The fibril diameter (median value) is a value measured by the following method.
(1) Using a scanning electron microscope (Model S-4800, manufactured by Hitachi, Ltd.), an enlarged photograph (7000x) of the mixture sheet is taken to obtain an image.
(2) Two lines equidistant from each other are drawn on the image in the horizontal direction to divide the image into three equal parts.
(3) The diameter of each PTFE fiber on the upper straight line is measured at three locations, and the average value is taken as the PTFE fiber diameter. The three locations to be measured are the intersection between the PTFE fiber and the straight line, and the locations 0.5 µm above and below the intersection (PTFE primary particles not formed into fibrils are excluded).
(4) The task of (3) above was then carried out for all the PTFE fibers on the lower straight line.
(5) Starting from the first image, the electrode mixture sheet was moved 1 mm in the right direction of the screen, photographed again, and the diameter of the PTFE fibers was measured according to the above (3) and (4). This was repeated until the number of fibers measured exceeded 80, and then the measurement was terminated.
(6) The median value of the diameters of all the PTFE fibers measured above was taken as the size of the fibril diameter.

Further preferably, the fibril diameter (median value) is 65 nm or less. Excessive fibril formation tends to result in loss of flexibility. Although the lower limit of the fibril diameter (median value) is not limited, from the viewpoint of strength, it is preferably, for example, 15 nm or more.

### (Electrochemical device)

The mixture sheet of the present disclosure can be used in various types of electrochemical devices. Specifically, the mixture sheet can be used in electrochemical devices such as a lithium ion secondary battery, a lithium ion capacitor, a hybrid capacitor, and an electric double layer capacitor. The lithium secondary battery may be a secondary battery that uses an electrolytic solution, or may be a solid secondary battery.

The mixture sheet production apparatus of the present disclosure can be used for the production of an electrode, a solid-state electrolyte layer, and the like.

### (Positive electrode)

When the mixture sheet produced in the present disclosure is a positive electrode, it is preferred that the mixture sheet is composed of a current collector and a mixture sheet containing the above-described positive electrode active material.

Examples of the material of the current collector for the positive electrode include metals such as aluminum, titanium, tantalum, stainless steel, and nickel, metal materials such as alloys thereof, and carbon materials such as carbon cloth and carbon paper. Among them, a metal material, particularly of aluminum or an alloy thereof, is preferred.

Examples of the material for the negative electrode current collector include chromium, SUS, nickel, iron, titanium, copper, cobalt, zinc, and the like, and copper, iron, and SUS are preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape. The thickness of the metal foil is arbitrary, but is usually 1 µm or more, preferably 3 µm or more, and more preferably 5 µm or more, and usually 1 mm or less, preferably 100 µm or less, and more preferably 50 µm or less. If the metal foil is thinner than this range, it may lack the strength required as a current collector. Conversely, if the metal foil is thicker than this range, handleability may be impaired.

Further, from the viewpoint of reducing the electrical contact resistance between the current collector and the positive electrode active material, it is preferable to coat the surface of the current collector with a conductive aid. Examples of the conductive aid include carbon and noble metals such as gold, platinum, and silver.

The ratio of the thickness of the current collector to the positive electrode mixture is not limited, but the value of (thickness of the positive electrode mixture on one side immediately before electrolytic solution injection)/(thickness of the current collector) is in the range of preferably 20 or lower, more preferably 15 or lower, and most preferably 10 or lower, and preferably 0.5 or higher, more preferably 0.8 or higher, and most preferably 1 or higher. If this range is exceeded, the current collector may generate heat due to Joule heat during high current density charging and discharging. If the ratio is below this range, the volume ratio of the current collector to the positive electrode active material increases, and the capacity of the battery may decrease.

The positive electrode may be produced according to a conventional method. An example of such a method includes laminating the mixture sheet and the current collector with an adhesive arranged therebetween, and then vacuum drying.

The density of the positive electrode mixture sheet is preferably in the range of 3.00 g/cm³ or more, more preferably 3.10 g/cm³ or more, and further preferably 3.20 g/cm³ or more, and preferably 3.80 g/cm³ or less, more preferably 3.75 g/cm³ or less, and further preferably 3.70 g/cm³ or less. If the density exceeds this range, the penetration of the electrolytic solution into the vicinity of the current collector/active material interface decreases, and the charge/discharge characteristics, particularly at high current densities, deteriorates, which may prevent a high output from being obtained. Meanwhile, if the density is lower than this range, the electric conductivity between the active materials decreases and battery resistance increases, which may prevent a high output from being obtained.

The surface area of the positive electrode mixture sheet is, from the viewpoint of increasing stability at high output and high temperature, preferably larger than the outer surface area of the battery exterior case. Specifically, it is preferred that the total mixture surface area of the positive electrode relative to the surface area of the exterior of the secondary battery be larger by a factor of 15 times or more, and more preferably 40 times or more. In the case of a rectangular shape with a bottom, the exterior surface area of the battery exterior case refers to the total area calculated from the length, width, and thickness dimensions of the case portion filled with the power generating elements, excluding the protruding parts of the terminals. In the case of a cylindrical shape with a bottom, the exterior surface area of the battery exterior case refers to the geometric surface area that approximates, as a cylinder, the case portion filled with the power generation elements, excluding the protruding portions of the terminal. The total mixture surface area of the positive electrode is the geometric surface area of the positive electrode mixture layer facing the mixture layer containing the negative electrode active material, and for a structure consisting of a positive electrode mixture layer formed on both sides via a current collector foil, refers to the sum of the areas calculated for each surface separately.

The thickness of the positive electrode is not limited, but from the viewpoint of a high capacity and a high output, the thickness of the mixture layer after subtracting the thickness of the metal portion of the current collector is, as the lower limit for one side of the current collector, preferably 10 µm or more, and more preferably 20 µm or more, and preferably 500 µm or less, and more preferably 450 µm or less.

The positive electrode may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

### Examples

Hereinafter, the present disclosure will be specifically described based on examples.

In the following examples, "parts" and "%" represent "parts by mass" and "% by mass", respectively, unless otherwise specified.

As a mixture sheet material, LiNi_{0.5}Mn_{0.3}Co_{0.2}O₂ as an active material, acetylene black as a conductive aid, and PTFE (F-104, manufactured by Daikin Industries, Ltd.) as a binder resin were weighed to give a ratio of 96:3:1. The weighed materials were charged into a high-speed mixer, 15 parts of liquid paraffin was added, and mixing was performed at 20,000 rpm for 2 minutes. An additional 15 parts of liquid paraffin was added and mixed in the same manner. The obtained mixture was charged between metal rolls that faced each other in a parallel direction to obtain a sheet. A diameter of the metal rolls was 250 mm, and the heating temperature was 90°C. The gap was adjusted to obtain a sheet having a thickness of 500 µm. Rolling was then performed to obtain a sheet A1 having a thickness of 300 µm.

In the manner shown in FIG. 2, two sheets 1 were superimposed and fed onto a rolling roll having a diameter of 250 mm and heated to 90°C, and press-fused at a pressure of 60 MPa. Then, rolling was performed to obtain a sheet A2 having a thickness of 300 µm.

As a mixture sheet material, LiNi_{0.5}Mn_{0.3}Co_{0.2}O₂ as an active material, acetylene black as a conductive aid, and PTFE (F-106, manufactured by Daikin Industries, Ltd.) as a binder resin were weighed to give a ratio of 96:3:1. The weighed materials were charged into a high-speed mixer, and mixing was performed at 20,000 rpm for 2 minutes. The obtained mixture was fed between metal rolls that faced each other in a parallel direction. The mixture coming out from between the rolls was again fed between the rolls, and this operation was repeated 10 times to obtain a sheet. A diameter of the metal rolls was 250 mm, and the heating temperature was 90°C. The gap was adjusted to obtain a sheet having a thickness of 300 µm. Rolling was then performed to obtain a sheet B1 having a thickness of 200 µm.

In the manner shown in FIG. 2, two sheets B1 were superimposed and fed onto a rolling roll having a diameter of 250 mm and heated to 90°C, and press-fused at a pressure of 60 MPa. Then, rolling was performed to obtain a sheet B2 having a thickness of 300 µm.

### <Evaluation of number of pinholes>

A region 5 cm wide and 10 cm long at the center of the produced sheet was photographed, and the defect area was measured. A "defect" referred to here is a through hole or a tear. The area was calculated using the photographed image.

**[Table 1]**

| | Sheet Name | Defect Area mm² |
|---|---|---|
| Example 1 | sheet A2 | 0 |
| Example 2 | sheet B2 | 0 |
| Comparative Example 1 | sheet A1 | 360 |
| Comparative Example 1 | sheet B1 | 844 |

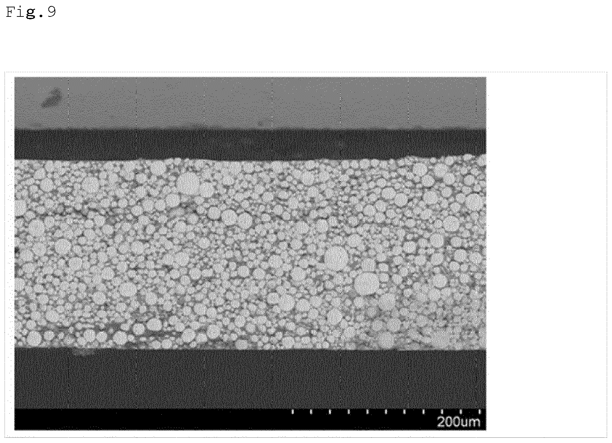

FIG. 9 shows a cross-sectional SEM observation of Example 1. It can be seen from the image that no stacking interfaces are observed in the sheet.

### Industrial Applicability

The mixture sheet production apparatus for an electrochemical device of the present disclosure can be used to produce a mixture sheet for use in various electrical devices.

### Reference Signs List

- 1.: kneader
- 2.: hopper
- 3.: forming roll
- 4.: stacking mechanism
- 5.: press-fusing mechanism
- 6.: current collector
- 7.: winder
- 8.: folding roll
- 9.: guide plate

## Claims

1. A mixture sheet production apparatus for an electrochemical device, comprising:
a stacking mechanism that stacks two or more mixture sheets containing a binder resin; and
a press-fusing mechanism that is provided downstream of the stacking mechanism and that integrates the stacked mixture sheets by applying pressure.

2. The mixture sheet production apparatus for an electrochemical device according to claim 1, wherein the press-fusing mechanism has parallel rolls that face each other.

3. The mixture sheet production apparatus according to claim 1 or 2, further comprising an adhesion mechanism that adheres the press-fused mixture sheets that have passed through the press-fusing mechanism to a current collector.

4. The mixture sheet production apparatus according to any one of claims 1 to 3, further comprising a sheet forming mechanism that produces the mixture sheets using a forming roll.

5. The mixture sheet production apparatus according to any one of claims 1 to 4, wherein the binder resin contains a polytetrafluoroethylene resin.

6. The mixture sheet production apparatus according to any one of claims 1 to 5, wherein the electrochemical device is a lithium ion secondary battery.

7. A method for producing a mixture sheet for an electrochemical device, the method comprising:
a step (1) of stacking two or more mixture sheets containing a binder resin; and
a step (2) of integrating the mixture sheets obtained in step (1) by applying pressure.

8. The method for producing a mixture sheet according to claim 7, wherein the pressure is applied at a temperature of 25°C or higher.

9. The method for producing a mixture sheet according to claim 7 or 8, further comprising a step (3) of adhering the integrated mixture sheets obtained in step (2) to a current collector.

10. The method for producing a mixture sheet according to any one of claims 7 to 9, wherein the mixture sheets used in step (1) are obtained in a step (0) of forming a mixture into a sheet shape using a forming roll.

11. The method for producing a mixture sheet according to any one of claims 7 to 10, wherein the binder resin contains a polytetrafluoroethylene resin.

12. The method for producing a mixture sheet according to any one of claims 7 to 11, wherein the integrated mixture sheets obtained in step (2) have, in a cross-sectional observation with an electron microscope, a monolayer structure in which a stacked structure derived from the stacking of the plurality of sheets has disappeared.

13. The method for producing a mixture sheet according to any one of claims 7 to 12, wherein the electrochemical device is a lithium ion secondary battery.
